# EUROPEAN PATENT SPECIFICATION

(11) **EP 2 918 558 B1**
(45) Date of publication and mention of the grant of the patent: **21.02.2018**
(21) Application number: 13852825.2
(22) Date of filing: 01.11.2013
(51) Int. Cl.: C03B 33/037, C03B 33/023, C03B 33/09, C03B 33/10, B26D 7/18, C03B 33/03

(54) **INITIAL CRACK FORMATION METHOD**
ANBRUCHFORMUNGSVERFAHREN
PROCÉDÉ DE FORMATION DE FENTES INITIALES

(30) Priority: 09.11.2012 JP 2012247230
(43) Date of publication of application: 16.09.2015
(73) Proprietor: Nippon Electric Glass Co., Ltd., Otsu-shi Shiga 520-8639 (JP)
(72) Inventor: ITOH Sho, Otsu-shi Shiga 520-8639 (JP); MORI Hiroki, Otsu-shi Shiga 520-8639 (JP); MORI Koichi, Otsu-shi Shiga 520-8639 (JP)
(74) Representative: Tetzner, Michael
(86) International application number: PCT/JP2013/079680
(87) International publication number: WO 2014/073472

(56) References cited:
- WO-A1-2012/141874
- WO-A1-2013/074760
- JP-A- 2007 268 953
- JP-A- 2009 083 119
- JP-A- 2012 046 400
- JP-A- 2012 046 400
- JP-A- 2013 060 331
- US-A1- 2010 119 846
- US-A1- 2011 017 711
- US-A1- 2011 226 832

## Description

### Technical Field

The present invention relates to an initial crack formation method for scoring a front-side end in a conveyance direction of a glass sheet while conveying the glass sheet, to thereby form an initial crack as a cutting start point of laser cleaving.

### Background Art

As is well known, as a method of cutting a glass sheet, a laser cleaving method as disclosed in JP 2011 116611 A has been known. As an example of an embodiment of the laser cleaving method, the following embodiment may be given. While a glass sheet to be cut is being conveyed along a conveyance path by conveyance means such as a conveyor, an initial crack as a cutting start point is formed in a front-side end in a conveyance direction of the glass sheet at an upstream side of the conveyance path. Then, the glass sheet is conveyed so that, at a downstream side of the conveyance path, the initial crack formed in the end passes through an irradiation region of a laser and a jetting region of a coolant (water, etc.) adjacent to the irradiation region in the conveyance direction.

Accordingly, a heated part that is heated with heat of the laser and a cooled part that is cooled with the coolant and adjacent to the heated part are generated on the periphery of the initial crack. Then, a cleaving part, which is formed by the initial crack as the start point, is propagated sequentially along with the conveyance of the glass sheet with a thermal stress (tensile stress) generated in the glass sheet due to a temperature difference between the heated part and the cooled part, to thereby cut the glass sheet. Note that, such an embodiment of cutting of a glass sheet has been adopted in a manufacturing line and the like for continuously manufacturing a large number of glass sheets.

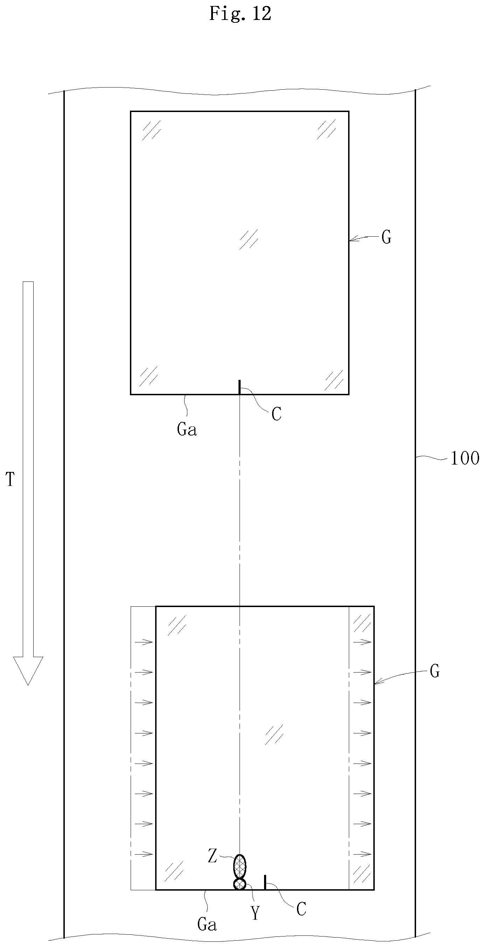

Meanwhile, in the case of cutting a glass sheet according to the above-mentioned embodiment, the following trouble has sometimes occurred. As illustrated in FIG. 12, while a glass sheet G loaded on a conveyor 100 is being conveyed in a direction T toward a downstream side, due to the influence of a vibration or the like, the glass sheet G may be displaced from a position where the glass sheet G is supposed to pass for the cutting (position indicated by the two-dot chain line in FIG. 12).

When such a situation occurs, an initial crack C formed in an end Ga of the glass sheet G does not pass through the irradiation region of the laser and the jetting region of the coolant so that a heated part Z, which is heated by the laser, and a cooled part Y, which is cooled with the coolant, are generated at positions displaced from the initial crack C. Therefore, although a thermal stress (tensile stress) is generated in the glass sheet G, the initial crack C as a cutting start point is not located at the position where the thermal stress is generated. Consequently, it becomes impossible to propagate a cleaving part from the initial crack C, with the result that the cutting of the glass sheet G may be hindered.

In order to eliminate the above-mentioned trouble, in JP 2012 46400 A, there is disclosed a crack formation device including: conveyance means for conveying a glass sheet; a crack formation member having a protrusion group formed of a plurality of protrusions in a part opposed to the glass sheet; and support means for supporting the crack formation member so that the crack formation member may be brought closer to or spaced apart from (may be raised or lowered with respect to) the glass sheet.

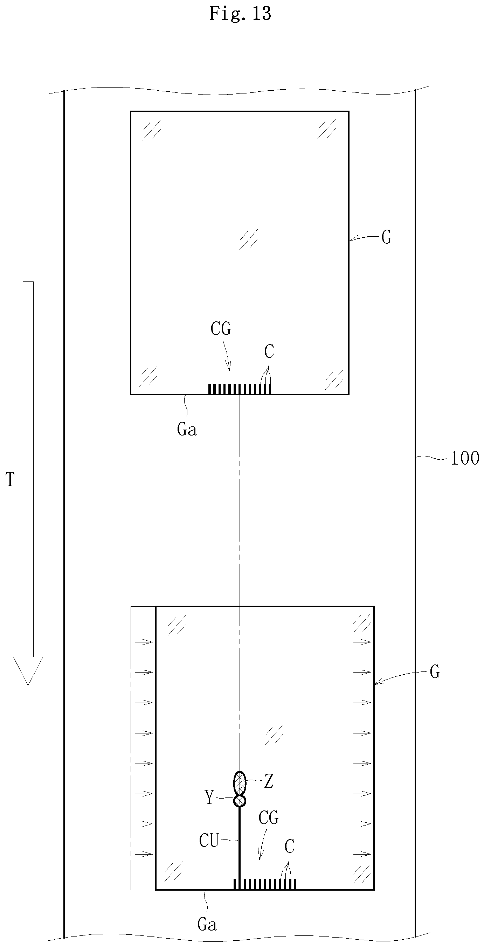

In this device, as illustrated in FIG. 13, an initial crack group CG including a plurality of aggregated initial cracks C can be formed in the end Ga of the glass sheet G. Therefore, even when the glass sheet G is slightly displaced during conveyance, the heated part Z and the cooled part Y are generated on the periphery of any one of the initial cracks C included in the initial crack group CG. As a result, a cleaving part CU can be propagated using the initial crack C as a start point, and thus the glass sheet G can be cut stably.

WO 2012/141874 A1 discloses a method for mechanically forming crack initiation defects in thin glass substrates having the features of the preamble of claim 1.

### Summary of Invention

### Technical Problem

However, the device disclosed in JP 2012 46400 A still has a problem to be solved. That is, when the initial crack group is formed through use of the device, the crack formation member temporarily presses the end of the glass sheet from above during conveyance. Therefore, the pressed glass sheet is caught and sandwiched between the crack formation member and the conveyance means, with the result that the movement of the glass sheet in the conveyance direction may be temporarily stopped.

In this case, both a force of the conveyance means for attempting to convey the glass sheet and a force of the crack formation member for attempting to press the glass sheet are applied to the glass sheet. In addition, each initial crack included in the initial crack group is formed with a force applied in a direction opposite to the conveyance direction of the glass sheet. Therefore, the following situation is caused. An excessive force is applied to the end so that cracks, damages, and the like occur in the glass sheet. As a result, there arises a problem in that the value of the glass sheet as a product is significantly impaired or the glass sheet cannot be used as a product.

In view of the above-mentioned circumstances, it is a technical object of the present invention to avoid occurrence of cracks, damages, and the like in a glass sheet when an initial crack group is formed in an end of the glass sheet during conveyance.

### Solution to Problem

According to the present invention, the problem is solved by an initial crack formation method according to claim 1.

The present invention provides an initial crack formation method for scoring a front-side end in a conveyance direction of a glass sheet conveyed in a state supported from below by conveyance means so as to form an initial crack group including a plurality of aggregated initial cracks in a width direction of the front-side end orthogonal to the conveyance direction, the initial crack formation method comprising: scoring the front-side end from above with a rotary scoring tool configured to rotate in a direction for drawing the glass sheet into the conveyance direction; and setting a rotational peripheral speed of the rotary scoring tool to be higher than a conveyance speed of the glass sheet, wherein the rotary scoring tool comprises: a shaft section configured to rotate about a rotation axis extending along a surface direction of the glass sheet; and a sheet-shaped scoring member extending radially from the shaft section and having flexibility.

Also disclosed is an initial crack formation device for scoring a front-side end in a conveyance direction of a glass sheet conveyed by conveyance means so as to form an initial crack group including a plurality of aggregated initial cracks in a width direction of the front-side end orthogonal to the conveyance direction, the initial crack formation device comprising a rotary scoring section for scoring the front-side end while rotating in a direction for drawing the glass sheet into the conveyance direction, the rotary scoring section being configured to rotate at a rotational peripheral speed higher than a conveyance speed of the glass sheet.

According to the above-mentioned configuration, the rotary scoring section scores the end of the glass sheet while rotating in the direction for drawing the glass sheet into the conveyance direction. Therefore, the rotary scoring section can form the initial crack group in the end without applying a force against the conveyance direction to the glass sheet. Thus, an excessive force is prevented from being applied to the end, and the situation in which cracks, damages, and the like occur in the glass sheet can be avoided to the extent possible. Further, the rotational peripheral speed of the rotary scoring section is higher than the conveyance speed of the glass sheet, and hence the initial crack group can be formed in the end without fail.

In the above-mentioned configuration, it is preferred that the rotary scoring section comprise: a shaft section configured to rotate about a rotation axis extending along a surface direction of the glass sheet; and a sheet-shaped scoring member extending radially from the shaft section and having flexibility.

With this, the sheet-shaped scoring member has flexibility, and hence, when the initial crack group is formed, the scoring member that is brought into contact with the glass sheet is deflected to be deformed in accordance with a force applied to the scoring member. Thus, the following advantageous effects are obtained. (I) It becomes extremely easy to position the rotary scoring section with respect to the glass sheet. That is, the degree of deformation of the scoring member varies depending on the separation distance between the glass sheet and the shaft section in the rotary scoring section. Therefore, the deflective deformation of the scoring member can prevent a force applied to the glass sheet as a reaction force with respect to a force applied to the scoring member from becoming excessive irrespective of the separation distance between the glass sheet and the shaft section. As a result, it becomes possible to omit the time and effort for positioning the rotary scoring section with respect to the glass sheet with good accuracy so as to prevent cracks in the glass sheet every time the thickness of the glass sheet targeted for formation of the initial crack group is changed. In addition, the effect is also obtained in which, even when the above-mentioned separation distance is slightly changed due to the mechanical vibration and the mounting accuracy of the rotary scoring section, the slight change in the separation distance does not easily affects the formation of the initial crack group. (II) It is possible to avoid such a situation that the force (friction force) of the rotary scoring section for attempting to draw the glass sheet into the conveyance direction becomes excessive. Thus, the situation in which the glass sheet is cracked due to the excessive force can be prevented. (III) Even in the case where the conveyance direction of the glass sheet and the width direction of the end are not orthogonal to each other, the scoring member is deformed, and a tip end of the scoring member scores the end in a direction orthogonal to the width direction. Therefore, even in such a case, the initial crack group can be formed in the direction orthogonal to the width direction. (IV) In the case of forming the initial crack group in the end of the glass sheet having waviness and warpage, the scoring member presses glass in the vicinity of each of an area having large waviness and warpage and an area having small waviness and warpage while being deflected. Thus, the scoring member can apply a suitable force to the end so as to score the end.

In the above-mentioned configuration, it is preferred that the rotary scoring section be configured to score the front-side end while rotating so that, when the rotary scoring section is located at a position where the sheet-shaped scoring member and the conveyance means are brought into contact with each other, and the rotary scoring section is rotated out of contact with the glass sheet, a value of P=(F/W) [N/mm] satisfies 0.02<P<0.15, where F [N] represents a pressing force to be applied from the sheet-shaped scoring member to the conveyance means and W [mm] represents a length in a direction along the rotation axis of a contact part in which the sheet-shaped scoring member and the conveyance means are brought into contact with each other.

With this, the initial crack group can be formed satisfactorily without cracking the glass sheet more reliably. Further, the condition for forming the initial crack group can be set only with two factors irrespective of the thickness of the glass sheet targeted for formation of the initial crack group: the pressing force to be applied from the scoring member to the conveyance means and the length in the direction along the rotation axis of the contact part in which the scoring member and the conveyance means are brought into contact with each other. Therefore, this condition can be managed simply.

In the above-mentioned configuration, it is preferred that the initial crack formation device further comprise first suction means for sucking glass particle generated from the glass sheet when the rotary scoring section scores the front-side end, the first suction means being provided on a front side in the conveyance direction of the glass sheet with respect to the rotary scoring section.

With this, when the initial crack group is formed, the glass particle generated from the glass sheet and scattered by the scoring member to a forward side in the conveyance direction can be sucked to be collected by the first suction means. Therefore, the risk in that the scattered glass particle may adhere to the glass sheet can be reduced, which can prevent the quality of the glass sheet from being degraded. Further, when the initial crack group is formed, the scoring member may damage the conveyance means so as to generate powder dust. However, even in such a case, the generated powder dust can be sucked to be collected together with the glass particle.

In the above-mentioned configuration, it is preferred that the initial crack formation device further comprise second suction means for sucking the glass particle generated from the glass sheet when the rotary scoring section scores the front-side end, the second suction means covering the rotary scoring section from above.

With this, when the initial crack group is formed, the glass particle generated from the glass sheet and diffused with a centrifugal force caused by the rotation of the rotary scoring section (scoring member) can be sucked to be collected by the second suction means. Further, even in the case where powder dust is generated from the conveyance means, the power dust can be sucked to be collected together with the glass particle.

Further disclosed is an initial crack formation device for scoring a front-side end in a conveyance direction of a glass sheet conveyed by conveyance means so as to form an initial crack group including a plurality of aggregated initial cracks in a width direction of the front-side end orthogonal to the conveyance direction, the initial crack formation device comprising an initial crack formation section for scoring the front-side end while moving in conformity with the conveyance direction of the glass sheet, the initial crack formation section being configured to move at a movement speed substantially equal to a conveyance speed of the glass sheet. The description "the initial crack formation section being configured to move at a movement speed substantially equal to a conveyance speed of the glass sheet" herein means that the movement speed of the initial crack formation section falls within a range of from 90% to 100% with respect to the conveyance speed of the glass sheet. Note that, the movement speed of the initial crack formation section preferably falls within a range of from 95% to 100%.

According to the above-mentioned configuration, the initial crack formation section scores the end of the glass sheet while moving in conformity with the conveyance direction of the glass sheet at the speed substantially equal to the conveyance speed of the glass sheet. Therefore, the initial crack formation section can form the initial crack group in the end without applying a force against the conveyance direction to the glass sheet. Thus, an excessive force is prevented from being applied to the end, and the situation in which cracks, damages, and the like occur in the glass sheet can be avoided to the extent possible. Further, when the initial crack group is formed, the initial crack group is formed in a state in which the relative positional relationship between the initial crack formation section and the glass sheet (end) does not substantially change in the conveyance direction of the glass sheet. Thus, glass particle and the like generated from the glass sheet can be prevented from being scattered during formation of the initial crack group.

In the above-mentioned configuration, it is preferred that the initial crack formation section be a rotary scoring section for scoring the front-side end while rotating in a direction for drawing the glass sheet into the conveyance direction, and that the rotary scoring section be configured to rotate at a rotational peripheral speed substantially equal to the conveyance speed of the glass sheet. The description "the rotary scoring section is configured to rotate at a rotational peripheral speed substantially equal to the conveyance speed of the glass sheet" herein means that the rotational peripheral speed of the rotary scoring section falls within a range of from 90% to 100% with respect to the conveyance speed of the glass sheet. Note that, the rotational peripheral speed of the rotary scoring section preferably falls within a range of from 95% to 100%.

With this, the rotary scoring section serving as the initial crack formation section itself forms the initial crack group in a manner of pressing the end while rotating. Therefore, the initial crack formation section is not required to be configured to, for example, score the end while translating with the glass sheet during conveyance. As a result, the configuration of the initial crack formation device can be simplified.

In the above-mentioned configuration, it is preferred that the rotary scoring section comprise: a shaft section configured to rotate about a rotation axis extending along a surface direction of the glass sheet; and a sheet-shaped scoring member extending radially from the shaft section and having flexibility.

With this, the same actions and effects as those described for the corresponding configuration in the above-mentioned description of the initial crack formation device can be obtained.

In the above-mentioned configuration, it is preferred that the rotary scoring section be configured to score the front-side end while rotating so that, when the rotary scoring section is located at a position where the sheet-shaped scoring member and the conveyance means are brought into contact with each other, and the rotary scoring section is rotated out of contact with the glass sheet, a value of P= (F/W) [N/mm] satisfies 0.5<P<3.0, where F [N] represents a pressing force to be applied from the sheet-shaped scoring member to the conveyance means and W [mm] represents a length in a direction along the rotation axis of a contact part in which the sheet-shaped scoring member and the conveyance means are brought into contact with each other.

With this, the same actions and effects as those described for the corresponding configuration in the above-mentioned description of the initial crack formation device can be obtained.

In the above-mentioned configuration, it is preferred that the initial crack formation section be configured to score an area of the front-side end excluding an edge part of the glass sheet.

With this, the initial crack group is formed in the area excluding the edge part of the glass sheet, and hence the strength of the glass sheet in the end can be kept high compared to the case where the initial crack group is formed in the edge part. Thus, the situation, in which the glass sheet during conveyance is cracked due to the action of an external force or the like after formation of the initial crack group, can be prevented to the extent possible.

In the above-mentioned configuration, it is preferred that the initial crack formation device further comprise crease removing means for removing a crease formed in the front-side end, the crease removing means being provided on an upstream side with respect to an initial crack formation region for forming the initial crack group in a conveyance path of the glass sheet.

With this, even in the case where the crease is formed in the end on the upstream side of the initial crack formation region, the crease removing means removes the crease so as to prevent the crease of the end from colliding with the initial crack formation section (rotary scoring section) during formation of the initial crack group. Therefore, the situation in which the glass sheet is cracked can be avoided to the extent possible.

Further disclosed is an initial crack formation method for scoring a front-side end in a conveyance direction of a glass sheet conveyed by conveyance means so as to form an initial crack group including a plurality of aggregated initial cracks in a width direction of the front-side end orthogonal to the conveyance direction, the initial crack formation method comprising: scoring the front-side end with an initial crack formation tool configured to move in conformity with the conveyance direction of the glass sheet; and setting a movement speed of the initial crack formation tool to be substantially equal to a conveyance speed of the glass sheet.

With this method, the same actions and effects as those in the above-mentioned description of the initial crack formation device can be obtained.

### Advantageous Effects of Invention

As described above, according to the one embodiment of the present invention, in order to form the initial crack group in the end of the glass sheet during conveyance, the end can be scored without applying a force against the conveyance direction, and an excessive force is prevented from being applied to the glass sheet. Therefore, the occurrence of cracks in the glass sheet can be avoided.

### Brief Description of Drawings

FIG. 1 is a sectional view illustrating an initial crack formation device according to a first embodiment.
FIG. 2 is a plan view illustrating the initial crack formation device according to the first embodiment.
FIG. 3 is a perspective view illustrating a flap wheel provided in the initial crack formation device according to the first embodiment.
FIG. 4 is a sectional view illustrating an action of an initial crack formation method according to the first embodiment.
FIG. 5 is a sectional view illustrating an initial crack formation device according to a second embodiment.
FIG. 6 is a sectional view illustrating an initial crack formation device according to a third embodiment.
FIG. 7 is a plan view illustrating an initial crack group formed in an end of a glass ribbon.
FIG. 8 is a sectional view illustrating an initial crack formation device according to a fourth embodiment.
FIG. 9a is a perspective view illustrating a flap wheel according to another embodiment, which is provided in the initial crack formation device.
FIG. 9b is a perspective view illustrating a flap wheel according to another embodiment, which is provided in the initial crack formation device.
FIG. 9c is a perspective view illustrating a flap wheel according to another embodiment, which is provided in the initial crack formation device.
FIG. 10 is a sectional view illustrating an initial crack formation device according to another embodiment.
FIG. 11a is a sectional view illustrating an air jet device according to another embodiment, which is provided in the initial crack formation device.
FIG. 11b is a sectional view illustrating a roll brush according to another embodiment, which is provided in the initial crack formation device.
FIG. 12 is a plan view illustrating a related-art initial crack formation method.
FIG. 13 is a plan view illustrating a related-art initial crack formation method.

### Description of Embodiments

Now, an initial crack formation device according to each of embodiments is described with reference to the accompanying drawings. Note that, in each of the embodiments described below, a glass ribbon having a thickness of 300 µm or less is targeted for formation of an initial crack group. The case is exemplified in which an initial crack group is formed in an end of the glass ribbon so as to cut (disconnect), by laser cleaving, a thick selvage part, which is formed at each end in a width direction of the glass ribbon, from a product part to be used as a product. In this case, the thickness of the glass ribbon targeted for formation of the initial crack group (targeted for cutting) is preferably 200 µm or less, more preferably 100 µm or less.

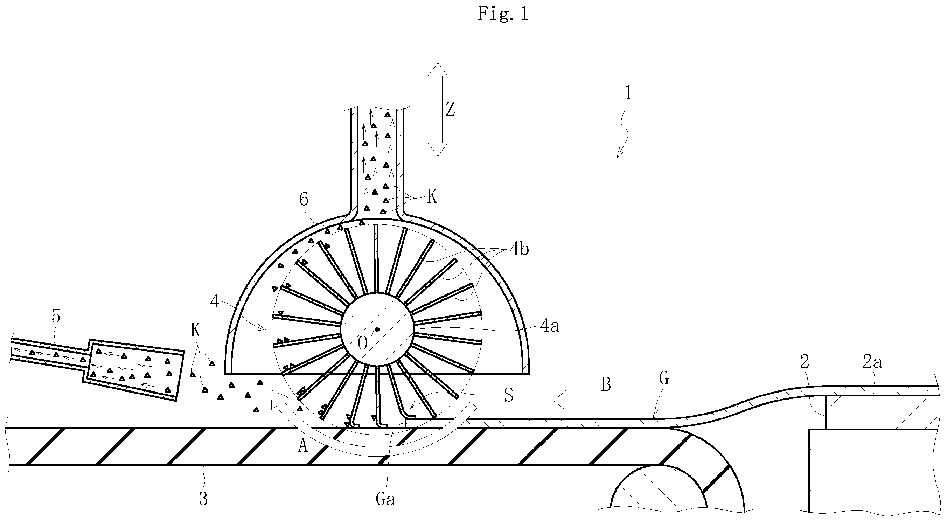

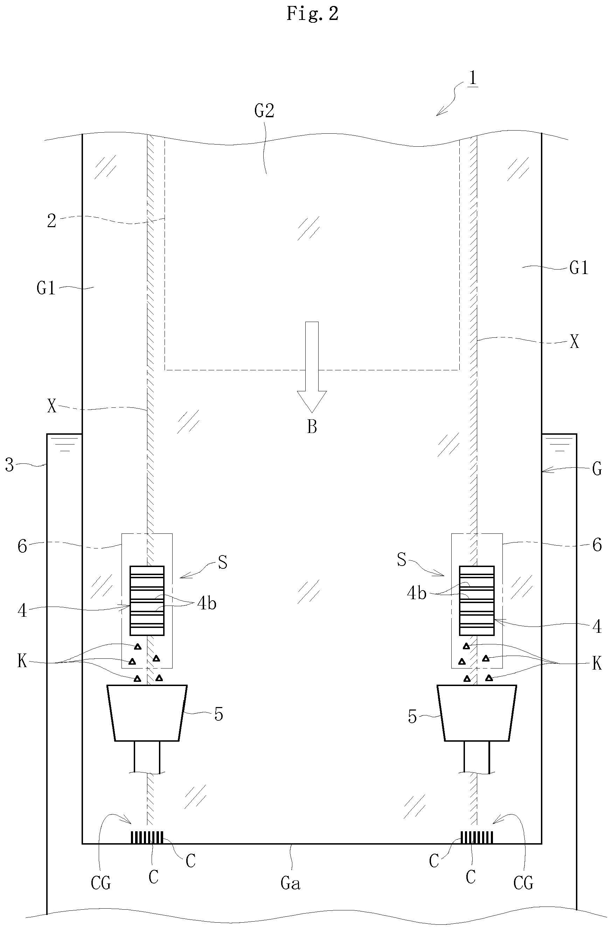

FIG. 1 is a sectional view illustrating an initial crack formation device according to a first embodiment. FIG. 2 is a plan view thereof. As illustrated in those figures, an initial crack formation device 1 comprises a crease removing table 2 serving as crease removing means for removing a crease formed on a glass ribbon G while allowing the glass ribbon G to pass along an upper surface 2a of the crease removing table 2, a belt conveyor 3 for conveying the glass ribbon G having passed along the crease removing table 2 in a conveyance direction B, a flap wheel 4 serving as a rotary scoring section (rotary scoring tool) for scoring, while rotating, a front-side end Ga in the conveyance direction B of the glass ribbon G during conveyance in an initial crack formation region S, and a suction device 5 and a suction device 6 serving as first suction means and second suction means for sucking glass particle K generated from the glass ribbon G during formation of an initial crack group CG.

The crease removing table 2 is installed on an upstream side with respect to the initial crack formation region S in a conveyance path of the glass ribbon G. The upper surface 2a of the crease removing table 2 is gently curved so that a center part thereof becomes higher than both ends thereof in the width direction of the glass ribbon G. Note that, the upper surface 2a may have, for example, a trapezoidal shape in which the center part is flat and both the ends are inclined. Then, the upper surface 2a is configured so that a selvage part G1 formed at each end in the width direction of the glass ribbon G extends off from both the ends in the width direction of the upper surface 2a so as to be floated. With this, the glass ribbon G passing along the upper surface 2a of the crease removing table 2 is pulled into the width direction due to the weight of the selvage part G1, with the result that a crease formed on the glass ribbon G is removed.

The belt conveyor 3 comprises a drive roller (not shown) and a driven roller (not shown) and a belt looped around both the rollers, and is configured so that the driven roller is rotationally driven to move the belt continuously in the conveyance direction B. Note that, the glass ribbon G conveyed by the belt conveyor 3 so as to pass along the crease removing table 2 is conveyed so that a preset cutting line X extending in a longitudinal direction of the glass ribbon G as a boundary between the selvage part G1 and a product part G2 extends in parallel to the conveyance direction B.

The flap wheel 4 is installed at a position where the preset cutting line X passes below the flap wheel 4. The flap wheel 4 comprises a shaft section 4a connected to a rotational drive source (for example, an air porter, a spindle motor, etc.) (not shown) and a plurality of abrasive cloths 4b serving as scoring members extending radially from the shaft section 4a. The flap wheel 4 is rotated during formation of the initial crack group CG so that a rotational peripheral speed of the flap wheel 4 becomes higher than a conveyance speed of the glass ribbon G. Further, the flap wheel 4 is configured to be moved in a direction Z illustrated in FIG. 1 by elevation means (not shown) so as to be brought closer to or spaced apart from the glass ribbon G (belt conveyor 3).

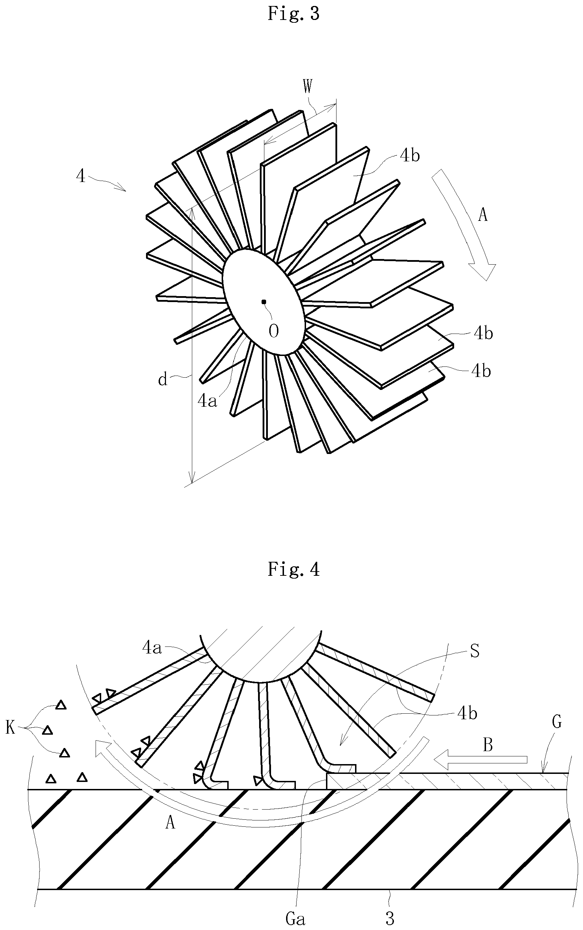

The shaft section 4a extends along a surface direction of the glass ribbon G and is formed into a columnar shape. The shaft section 4a is configured to rotate in a direction A about a rotation axis O. As illustrated in FIG. 3, the abrasive cloth 4b has a rectangular shape and one side of the rectangle is fixed to an outer peripheral surface of the shaft section 4a. Then, the plurality of abrasive cloths 4b are arranged radially at an equal pitch. Abrasive grains for scoring the end Ga of the glass ribbon G adhere to an entire region of a front-side surface in the rotation direction (direction A) among surfaces of the abrasive cloth 4b. In this case, as the abrasive grains, various abrasive grains made of alumina, carborundum, or the like may be used. However, from the viewpoint of the formation of the satisfactory initial crack group CG and the durability of the abrasive grains, it is preferred to use carborundum. Further, the abrasive cloth 4b has flexibility and can be deflected to be deformed in accordance with a force applied to the abrasive cloth 4b. In addition, the length in a radial direction of the abrasive cloth 4b is larger than a separation distance between the belt conveyor 3 and the shaft section 4a during formation of the initial crack group CG. With this, the abrasive cloth 4b and the belt conveyor 3 are continuously brought into contact with each other along with the rotation of the flap wheel 4 during formation of the initial crack group CG.

In this case, it is preferred that an outer diameter dimension d of the flap wheel 4 fall within a range of 25 mm<d<200 mm. Further, as the condition for suitably forming the initial crack group CG, when the flap wheel 4 is rotated out of contact with the glass ribbon G, the flap wheel 4 is rotated so that a value of P=F/W [N/mm] (F: pressing force per unit width) satisfies 0.02<P<0.15, where F [N] represents a pressing force to be applied from the abrasive cloth 4b to the belt conveyor 3 and W [mm] represents a length of a contact part between the abrasive cloth 4b and the belt conveyor 3 (in this embodiment, the length W of the abrasive cloth 4b in a direction along the rotation axis O illustrated in FIG. 3 corresponds to the length of the contact part) . It is preferred that the flap wheel 4, which is rotated so as to satisfy the above-mentioned condition, form the initial crack group CG. In addition, it is preferred that the rotational peripheral speed of the flap wheel 4 be 1.5 times to 10 times as high as the conveyance speed of the glass ribbon G.

The suction device 5 is installed so as to be fixed on a front side in the conveyance direction B of the glass ribbon G with respect to the flap wheel 4. Then, the suction device 5 is connected to a negative pressure generation device (for example, a vacuum pump) (not shown) for generating a negative pressure so as to suck the glass particle K generated from the glass ribbon G. Further, a suction port formed at a tip end of the suction device 5 has a wide shape in the surface direction of the glass ribbon G. When the flap wheel 4 (abrasive cloth 4b) starts forming the initial crack group CG, the suction device 5 starts suction so as to collect the glass particle K generated from the glass ribbon G and scattered to a forward side in the conveyance direction B. Further, when the glass ribbon G finishes passing below the suction device 5, the suction device 5 stops suction.

The suction device 6 covers the flap wheel 4 from above and is connected to the negative pressure generation device (not shown) in the same way as in the suction device 5. Further, a suction port formed at a lower end of the suction device 6 has a substantially semi-cylindrical vertical sectional side shape. Then, when the flap wheel 4 (abrasive cloth 4b) starts forming the initial crack group CG, the suction device 6 is configured to suck and collect the glass particle K generated from the glass ribbon G and diffused with a centrifugal force caused by the rotation of the flap wheel 4. Note that, the suction device 6 can move in the direction Z in synchronization with the movement of the flap wheel 4 in the direction Z.

Now, an initial crack formation method using the initial crack formation device 1 according to the above-mentioned first embodiment, and the actions and effects thereof are described.

First, the height position of the flap wheel 4 for forming the initial crack group CG in the end Ga of the glass ribbon G is determined. The flap wheel 4 is lowered in the direction Z to a position where the abrasive cloth 4b and the belt conveyor 3 are brought into contact with each other. Then, the flap wheel 4 is rotated out of contact with the glass ribbon G, and the height position of the flap wheel 4 is adjusted to be determined so that the value of the pressing force P= (F/W) [N/mm] per unit width, which is applied from the abrasive cloth 4b to the belt conveyor 3, satisfies 0.02<P<0.15. Note that, the pressing force F [N] can be measured with a load cell or the like mounted on the belt conveyor 3.

By adjusting the pressing force P to such a value, the risk in that the glass ribbon G may be cracked can be reduced during formation of the initial crack group CG. Further, by adjusting the pressing force P to such a value, a fluctuation in thickness of the glass ribbon G targeted for formation of the initial crack group CG is negligibly small, and hence the condition for forming the initial crack group CG can be set only with two factors : the pressing force F to be applied from the abrasive cloth 4b to the belt conveyor 3 and the length W (W illustrated in FIG. 3 in this embodiment) in the direction along the rotation axis O in the contact part between the abrasive cloth 4b and the belt conveyor 3. Therefore, this condition can be managed simply.

Note that, in the initial crack formation device 1, the abrasive cloth 4b provided in the flap wheel 4 has flexibility, and hence it is extremely easy to position the flap wheel 4 with respect to the glass ribbon G so as to adjust the pressing force P. That is, the degree of deformation of the abrasive cloth 4b varies depending on the separation distance between the glass ribbon G and the shaft section 4a in the flap wheel 4. Therefore, the deflective deformation of the abrasive cloth 4b can prevent a force applied to the glass ribbon G as a reaction force with respect to a force applied to the abrasive cloth 4b from becoming excessive irrespective of the separation distance between the glass ribbon G and the shaft section 4a. As a result, it becomes possible to omit the time and effort for positioning the flap wheel 4 with respect to the glass ribbon G with good accuracy so as to prevent cracks in the glass ribbon G every time the thickness of the glass ribbon G targeted for formation of the initial crack group CG is changed. In addition, the effect is also obtained in which, even when the above-mentioned separation distance is slightly changed due to the mechanical vibration and the mounting accuracy of the flap wheel 4, the slight change in the separation distance does not easily affects the formation of the initial crack group CG.

When the height position of the flap wheel 4 during formation of the initial crack group CG is determined, the flap wheel 4 is raised in the direction Z to a height position where the flap wheel 4 is not brought into contact with the glass ribbon G and the belt conveyor 3 so as to stand by. After that, when a sensor (not shown) detects the end Ga of the glass ribbon G conveyed from the upstream side, the flap wheel 4 is lowered in the direction Z to the height position determined in advance. Then, as illustrated in FIG. 4, the initial crack group CG is formed in the front-side end Ga in the conveyance direction B due to the rotation of the flap wheel 4. In this case, although a crease may be formed in the glass ribbon G on the upstream side of the initial crack formation region S, the crease is removed by the crease removing table 2. Thus, the crease of the end Ga can be prevented from colliding with the flap wheel 4 during formation of the initial crack group CG. Accordingly, the situation in which the glass ribbon G is cracked can be avoided to the extent possible.

Then, the flap wheel 4 (abrasive cloth 4b) scores the end Ga of the glass ribbon G while rotating in a direction for drawing the glass ribbon G into the conveyance direction B during formation of the initial crack group CG. With this, the abrasive cloth 4b can form the initial crack group CG in the end Ga without applying a force against the conveyance direction B to the glass ribbon G. Further, the abrasive cloth 4b has flexibility, and the abrasive cloth 4b that is brought into contact with the glass ribbon G is deflected to be deformed in accordance with a force applied to the abrasive cloth 4b. Thus, it is possible to avoid such a situation that a force (friction force) of the abrasive cloth 4b for attempting to draw the glass ribbon G into the conveyance direction B becomes excessive.

Accordingly, an excessive force is prevented from being applied to the end Ga of the glass ribbon G, and the situation in which the glass ribbon G is cracked can be avoided to the extent possible. Further, the rotational peripheral speed of the flap wheel 4 is higher than the conveyance speed of the glass ribbon G, and hence the initial crack group CG can be formed in the end Ga without fail. Note that, it is preferred that the width of the initial crack group CG to be formed in the end Ga be from about 10 to 30 mm.

Further, the abrasive cloths 4b are arranged at an equal pitch on the outer peripheral surface of the shaft section 4a, and hence such a situation can be avoided that an abnormal vibration is generated in the flap wheel 4 that is being rotated. In addition, even in the case where the glass ribbon G has waviness and warpage, due to the deformation of the abrasive cloth 4b, the abrasive cloth 4b presses glass in the vicinity of each of an area having large waviness and warpage and an area having small waviness and warpage while being deflected. Thus, the abrasive cloth 4b can apply a suitable force to the end Ga so as to score the end Ga. Further, even in the case where the conveyance direction B of the glass ribbon G and the width direction of the end Ga are not orthogonal to each other, the abrasive cloth 4b is deformed, and a tip end thereof (part in contact with the glass ribbon G) scores the end Ga in a direction orthogonal to the width direction. Therefore, even in this case, the initial crack group CG can be formed in the direction orthogonal to the width direction of the end Ga.

Note that, when the initial crack group CG is formed, the glass particle K generated from the glass ribbon G and scattered to the forward side in the conveyance direction B and the glass particle K diffused with the centrifugal force caused by the rotation of the flap wheel 4 are collected by the suction device 5 and the suction device 6, respectively. Therefore, the risk in that the glass particle K may adhere to the glass ribbon G can be reduced, which can prevent the quality of the glass sheet manufactured from the glass ribbon G from being degraded. Further, the abrasive cloth 4b may damage the belt conveyor 3 so as to generate powder dust. However, even in this case, the generated powder dust can be collected by both the suction devices 5 and 6 together with the glass particle K.

When the formation of the initial crack group CG in the end Ga of the glass ribbon G is completed, the flap wheel 4 is raised in the direction Z so as to prevent unnecessary scores from being engraved in the glass ribbon G. Note that, it is preferred that a time period from the start of the formation of the initial crack group CG by the flap wheel 4 to the raise of the flap wheel 4 be about 1.0 second. Further, in the case of using the above-mentioned carborundum as the abrasive grains, it becomes possible to score glass more deeply. Therefore, even in the case where an area apart from an end surface of the end Ga is scored, cutting can be performed from the area during a laser cleaving step as a subsequent step. As a result, it is not necessary to precisely set the condition for appropriate timing of scoring. Further, when the formation of the initial crack group CG is completed, the suction of the glass particle K by both the suction devices 5 and 6 is stopped. Thus, a series of steps of forming the initial crack group CG is ended, and laser cleaving is performed with respect to the glass ribbon G conveyed to the downstream side.

Now, an initial crack formation device according to a second embodiment is described with reference the accompanying drawings. Note that, in the drawings illustrating the second embodiment and the other embodiments described later, components having the same functions or the same shapes as those of the initial crack formation device 1 according to the embodiments that have been described are denoted by the same reference symbols so that the repeated descriptions thereof are omitted.

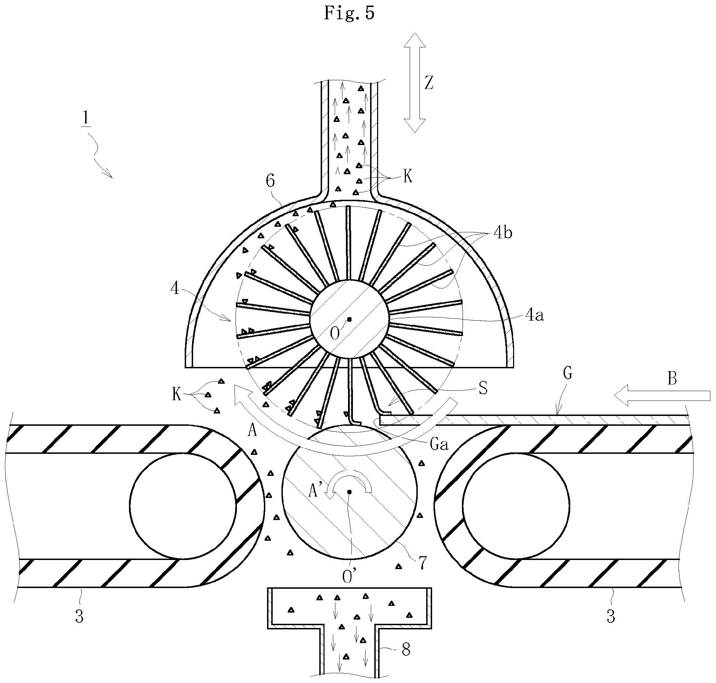

FIG. 5 is a sectional view illustrating an initial crack formation device 1 according to the second embodiment. The initial crack formation device 1 according to the second embodiment is different from the initial crack formation device according to the above-mentioned first embodiment in that: the belt conveyor 3 for conveying the glass ribbon G is divided into two units; a support roller 7 for supporting the glass ribbon G during conveyance is installed between the belt conveyors 3; and a suction device 8 for sucking and collecting the glass particle K generated and scattered from the glass ribbon G is provided below the support roller 7.

The support roller 7 is formed into a columnar shape and is rotated in a direction A' about a rotation axis O'. Unlike the flap wheel 4, the support roller 7 does not have a rotational drive source and is configured to be rotated by the abrasive cloths 4b provided in the flap wheel 4 or the friction with respect to the glass ribbon G. That is, in an opposing part between the flap wheel 4 and the support roller 7, the support roller 7 is rotated so that movement directions along tangents of both outer peripheries of the flap wheel 4 and the support roller 7 are matched with each other.

The suction device 8 is connected to a negative pressure generation device (not shown) in the same way as in the suction device 5 and the suction device 6. Further, a suction port formed at an upper end of the suction device 8 extends in a direction along the rotation axis O' of the support roller 7. Then, when the flap wheel 4 starts forming the initial crack group CG in the end Ga in the initial crack formation region S, the suction device 8 sucks and collects the glass particle K generated and scattered from the glass ribbon G. The suction device 8 is configured to stop sucking the glass particle K when the glass ribbon G finishes passing above the suction device 8.

Now, the actions and effects of an initial crack formation method using the initial crack formation device 1 according to the above-mentioned second embodiment are described.

According to the initial crack formation method using the initial crack formation device 1, in addition to the actions and effects described in the above-mentioned first embodiment, the following actions and effects are obtained. That is, in the initial crack formation method according to the first embodiment, the abrasive cloth 4b may damage the belt conveyor 3 so as to generate powder dust from the belt conveyor 3. However, in the initial crack formation method according to the second embodiment, the abrasive cloth 4b is brought into contact with only the support roller 7 except for the glass ribbon G. Then, the support roller 7 is rotated so that the movement direction along the tangent of the outer periphery of the support roller 7 is matched with the direction along the tangent of the outer periphery of the flap wheel 4 in the opposing part with respect to the flap wheel 4 due to the friction with respect to the abrasive cloth 4b. Thus, the support roller 7 can be prevented from being scraped due to the contact with the abrasive cloth 4b to the extent possible, with the result that the generation of the powder dust from the support roller 7 can be suppressed.

Now, an initial crack formation device according to a third embodiment is described with reference to the accompanying drawings.

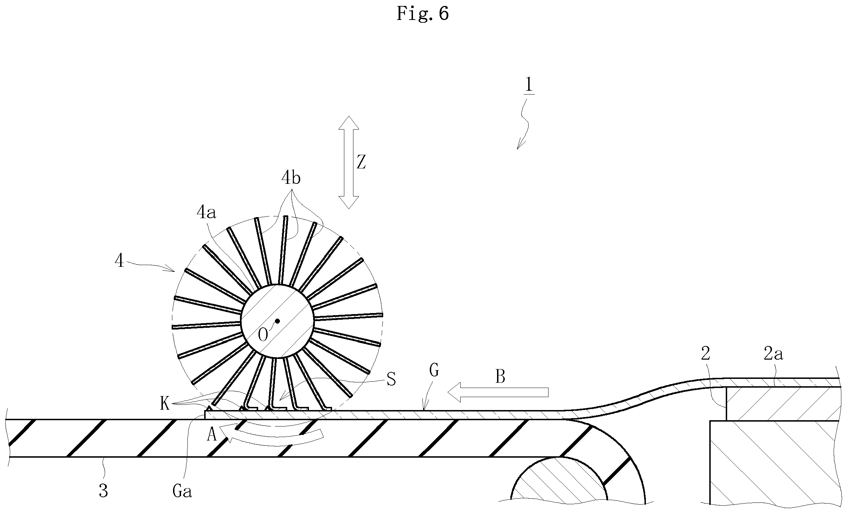

FIG. 6 is a sectional view illustrating an initial crack formation device 1 according to the third embodiment. The initial crack formation device 1 according to the third embodiment is different from the initial crack formation device according to the above-mentioned first embodiment in that: both the suction devices 5 and 6 are removed; the rotational peripheral speed of the flap wheel 4 is different; and the area in which the initial crack group CG is formed in the end Ga of the glass ribbon G is different. Note that, in this embodiment, the flap wheel 4 forms an initial crack formation section (initial crack formation tool).

The flap wheel 4 is rotated so that the rotational peripheral speed thereof becomes substantially equal to the conveyance speed of the glass ribbon G during formation of the initial crack group CG. Specifically, the flap wheel 4 is rotated so that the rotational peripheral speed thereof falls within a range of from 90% to 100%, preferably from 95% to 100% with respect to the conveyance speed of the glass ribbon G.

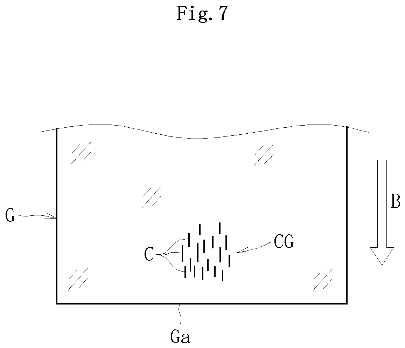

Further, the flap wheel 4 initially stands by at a height position where the flap wheel 4 is not brought into contact with the glass ribbon G or the belt conveyor 3. Then, after a front-side edge part in the conveyance direction B of the glass ribbon G passes immediately below the rotation axis O of the flap wheel 4, the flap wheel 4 is lowered in the direction Z to the height position determined in advance so as to score the end Ga as described later. Thus, the flap wheel 4 is configured to form the initial crack group CG in an area of the end Ga excluding the edge part of the glass ribbon G as illustrated in FIG. 7.

In this case, as the condition for suitably forming the initial crack group CG, when the flap wheel 4 is rotated out of contact with the glass ribbon G, the flap wheel 4 is rotated so that a value of P=F/W [N/mm] satisfies 0.5<P<3.0, where F [N] represents a pressing force to be applied from the abrasive cloth 4b to the belt conveyor 3 and W [mm] represents a length of a contact part between the abrasive cloth 4b and the belt conveyor 3. Then, it is preferred that the flap wheel 4, which is rotated so as to satisfy the above-mentioned condition, form the initial crack group CG.

Now, an initial crack formation method using the initial crack formation device 1 according to the above-mentioned third embodiment, and the actions and effects thereof are described.

First, the height position of the flap wheel 4 for forming the initial crack group CG in the end Ga of the glass ribbon G is determined. The flap wheel 4 is lowered in the direction Z to a position where the abrasive cloth 4b and the belt conveyor 3 are brought into contact with each other. Then, the lowered flap wheel 4 is rotated out of contact with the glass ribbon G. In this case, the height position of the flap wheel 4 is adjusted to be determined so that the value of the pressing force P=(F/W) [N/mm] per unit width, which is applied from the abrasive cloth 4b to the belt conveyor 3, satisfies 0.5<P<3.0. Thus, the height position of the flap wheel 4 during formation of the initial crack group CG is determined. Then, when the height position is determined, the flap wheel 4 is raised in the direction Z so as to stand by.

After that, when a sensor (not shown) detects that the front-side edge part in the conveyance direction B of the glass ribbon G has passed immediately below the rotation axis O of the flap wheel 4, the flap wheel 4 is lowered in the direction Z to the height position determined in advance so as to score the end Ga. Thus, the initial crack group CG is formed in an area of the end Ga excluding the edge part of the glass ribbon G.

According to the initial crack formation method using the initial crack formation device 1, the flap wheel 4 (abrasive cloth 4b) scores the end Ga of the glass ribbon G while rotating in a direction for drawing the glass ribbon G into the conveyance direction B at a rotational peripheral speed substantially equal to the conveyance speed of the glass ribbon G. Therefore, the abrasive cloth 4b can form the initial crack group CG in the end Ga without applying a force against the conveyance direction B to the glass ribbon G. Thus, an excessive force is prevented frombeing applied to the end Ga, and the situation in which cracks, damages, and the like occur in the glass ribbon G can be avoided to the extent possible.

Further, according to the initial crack formation method using the initial crack formation device 1, the actions and effects described in the above-mentioned first embodiment are obtained. From the viewpoint of preventing the scattering of the glass particle K and the cracking of the glass ribbon G, more excellent actions and effects are exhibited.

That is, when the initial crack group CG is formed, the initial crack group CG is formed in a state in which the relative positional relationship between the abrasive cloth 4b and the glass ribbon G (end Ga) does not substantially change in the conveyance direction B of the glass ribbon G. Thus, the glass particle K and the like generated from the glass ribbon G can be prevented from being scattered during formation of the initial crack group CG. Therefore, in this embodiment, compared to the above-mentioned first and second embodiments, it is not necessary to provide a suction device for sucking the glass particle K.

Further, the initial crack group CG is formed in an area excluding the edge part of the glass ribbon G, and hence compared to the case where the initial crack group is formed in the edge part, the strength of the glass ribbon G in the end Ga can be kept high. Thus, the situation, in which the glass ribbon G during conveyance is cracked due to the action of an external force or the like after formation of the initial crack group CG, can be prevented to the extent possible.

In this case, the actions and effects of the initial crack formation method according to the third embodiment can also be obtained by an initial crack formation method using an initial crack formation device according to a fourth embodiment described later. However, in the initial crack formation device 1 according to the third embodiment, the flap wheel 4 serving as the initial crack formation section itself presses the end Ga so as to form the initial crack group CG while rotating, unlike the initial crack formation device according to the fourth embodiment. Therefore, the configuration of the initial crack formation device 1 can be simplified.

Note that, in the initial crack formation device 1 according to the third embodiment, the belt conveyor 3 for conveying the glass ribbon G may be divided into two units, and the support roller 7 for supporting the glass ribbon G during conveyance may be installed between the belt conveyors 3 in the same way as in the initial crack formation device according to the above-mentioned second embodiment. In this case, the suction device 8 for sucking the glass particle K may be omitted.

Now, the initial crack formation device according to the fourth embodiment is described with reference to the accompanying drawings.

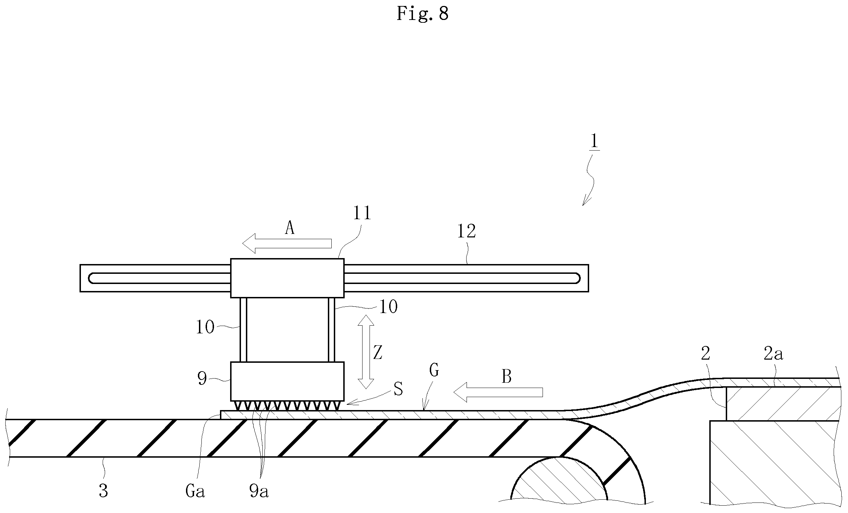

FIG. 8 is a sectional view illustrating an initial crack formation device 1 according to the fourth embodiment (not in accordance with the present invention). The initial crack formation device 1 according to the fourth embodiment is different from the initial crack formation device according to the above-mentioned first embodiment in that: both the suction devices 5 and 6 are removed; and an initial crack formation member 9 having a plurality of protrusions 9a is provided in place of the flap wheel 4 so as to form the initial crack group CG in the end Ga of the glass ribbon G. Note that, in this embodiment, the initial crack formation member 9 forms the initial crack formation section (initial crack formation tool).

The initial crack formation member 9 is coupled to a slide member 11 through intermediation of an arm 10 that is operated (raised or lowered) in the direction Z. The initial crack formation member 9 is configured to move in a direction A along with the movement of the slide member 11 along a guide rail 12 extending in parallel to the conveyance direction B of the glass ribbon G.

The initial crack formation member 9 (slide member 11) initially stands by at an upstream side end of the guide rail 12 (right end of the guide rail 12 in FIG. 8) and starts moving after the end Ga of the glass ribbon G passes immediately below the initial crack formation member 9. Then, the initial crack formation member 9 moves in the direction A at a speed substantially equal to the conveyance speed of the glass ribbon G in conformity with the conveyance direction B of the glass ribbon G. Specifically, the initial crack formation member 9 moves at a movement speed that falls within a range of from 90% to 110%, preferably from 95% to 105% with respect to the conveyance speed of the glass ribbon G.

Further, the initial crack formation member 9 has the plurality of protrusions 9a on a lower surface thereof. The plurality of protrusions 9a are arranged in the longitudinal direction and the width direction of the glass ribbon G. Due to the lowering operation of the initial crack formation member 9 along with the operation of the arm 10, the plurality of protrusions 9a press an area of the end Ga excluding the edge part of the glass ribbon G so as to form the initial crack group CG. Note that, the initial crack formation member 9 having completed the formation of the initial crack group CG is raised along with the operation of the arm 10 and moves in a direction opposite to the direction A of the slide member 11 so as to return to the initial position.

Now, the actions and effects of an initial crack formation method using the initial crack formation device 1 according to the above-mentioned fourth embodiment are described.

According to the initial crack formation method using the initial crack formation device 1, the initial crack formation member 9 scores the end Ga of the glass ribbon G while moving at a speed substantially equal to the conveyance speed of the glass ribbon G in conformity with the conveyance direction B of the glass ribbon G. With this, the initial crack formation member 9 can form the initial crack group CG in the end Ga without applying a force against the conveyance direction B to the glass ribbon G. Thus, an excessive force is prevented from being applied to the end Ga, and the situation in which cracks, damages, and the like occur in the glass ribbon G can be avoided to the extent possible.

Further, when the initial crack group CG is formed, the initial crack group CG is formed in a state in which the relative positional relationship between the initial crack formation member 9 and the glass ribbon G (end Ga) does not substantially change in the conveyance direction B of the glass sheet G. Thus, the glass particle K and the like generated from the glass ribbon G can be prevented from being scattered during formation of the initial crack group CG.

Further, the initial crack group CG is formed in an area excluding the edge part of the glass ribbon G, and hence the strength of the glass ribbon G in the end Ga can be kept high compared to the case where the initial crack group is formed in the edge part. Thus, the situation, in which the glass ribbon G during conveyance is cracked due to the action of an external force or the like after formation of the initial crack group CG, can be prevented to the extent possible.

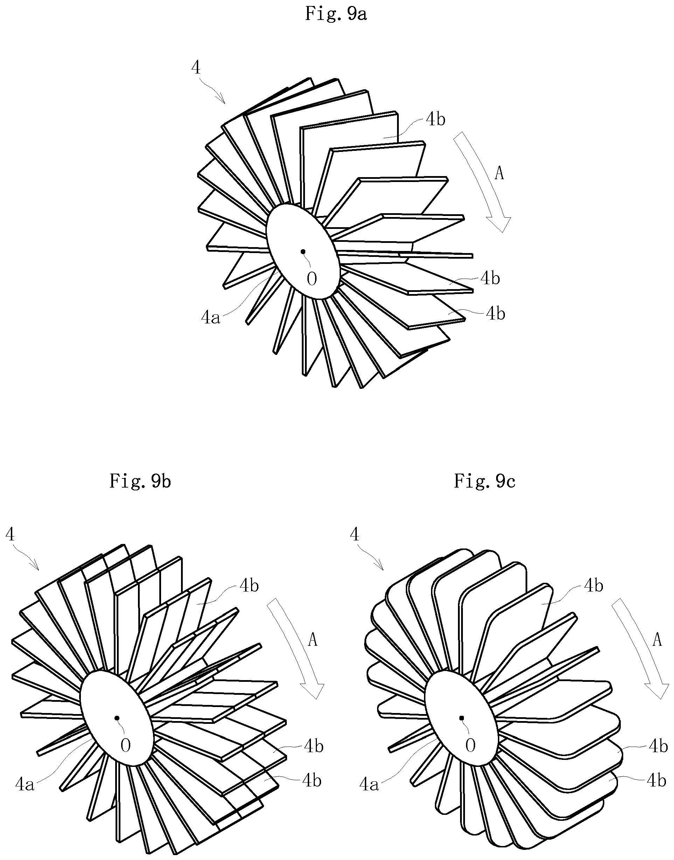

In this case, the initial crack formation device is not limited to the configurations described in the above-mentioned respective embodiments. For example, the flap wheels provided in the initial crack formation devices according to the above-mentioned first to third embodiments may have shapes as illustrated in FIGS. 9a, 9b, and 9c. Note that, in the case where the abrasive cloth 4b is inclined as illustrated in FIG. 9a, the region ranging from one end to the other end of the abrasive cloth 4b is brought into contact with the end Ga of the glass ribbon G sequentially in a direction along the rotation axis O. Therefore, the end Ga can be scored more reliably. Further, in the case where the abrasive cloth 4b provided in the flap wheel 4 is divided into a plurality of portions in the direction along the rotation axis O as illustrated in FIG. 9b, the initial crack group can be formed more satisfactorily in glass having waviness and warpage. Further, in the case where the abrasive cloth 4b is not divided into a plurality of portions, when the length of the abrasive cloth 4b in the direction along the rotation axis O (hereinafter referred to as "width" of the abrasive cloth 4b in this paragraph) becomes larger, both ends of the abrasive cloth 4b in the width can score the end Ga of the glass ribbon G without any problem, whereas it may be difficult for a center portion of the abrasive cloth 4b in the width to score the end Ga of the glass ribbon G. However, in the flap wheel 4 illustrated in FIG. 9b, the abrasive cloth 4b is divided into a plurality of portions, and a plurality of abrasive cloths each having a small width are arrayed so as to form the entire abrasive cloth 4b. Therefore, the above-mentioned trouble does not occur, and the end Ga can be scored satisfactorily. Further, in the case where a corner portion located at each end of the width of the abrasive cloth 4b is rounded as illustrated in FIG. 9c, glass becomes less liable to be cracked. Further, as the scoring member, a metallic member such as steel wool, a member obtained by adding abrasive grains to resin fibers, and the like, as well as the abrasive cloth, may be used.

In addition, the ratio of the length of the abrasive cloth (scoring member) with respect to the outer diameter of the flap wheel, and the number of the abrasive cloths provided in the flap wheel may be appropriately changed. For example, in the case where the ratio of the length of the abrasive cloth is increased or the case where the number of the abrasive cloths is reduced, the flexibility of the abrasive cloth can be increased. Further, the flap wheel may be configured to move in synchronization with the movement of the glass ribbon in the conveyance direction. With this, the initial crack group can be formed more reliably. Note that, in the case of the above-mentioned configuration, the glass particle can be sucked to be collected without fail, for example, by configuring the initial crack formation device according to the above-mentioned first embodiment so that the suction device for sucking the glass particle also moves in synchronization with the flap wheel.

Further, in the case where it is desired to enlarge the range in which the initial crack group is to be formed, the length of the flap wheel in the direction along the rotation axis may be increased or a plurality of flap wheels may be arrayed. Note that, in the case where the plurality of flap wheels are arrayed, the flap wheels may be arrayed linearly or in a staggered manner.

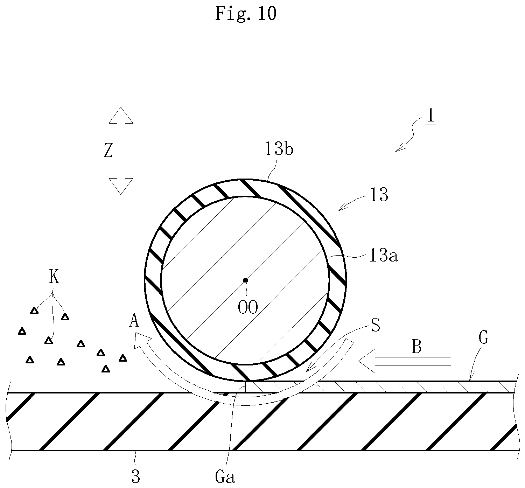

Further, although the flap wheel is used as the rotary scoring section in the above-mentioned first to third embodiments, an abrasive band 13 as illustrated in FIG. 10 may be used as the rotary scoring section (not in accordance with the present invention). Note that, in FIG. 10, components having the same functions or the same shapes as those of the initial crack formation device according to each of the above-mentioned embodiments are denoted by the same reference symbols so that the repeated descriptions thereof are omitted. The abrasive band 13 comprises a columnar shaft section 13a that is rotated about a rotation axis OO and a rubber band 13b that is fitted on an outer peripheral surface of the shaft section 13a and that has abrasive grains adhering to an outer surface of the rubber band 13b. The abrasive band 13 is configured so that the rotational peripheral speed thereof is higher than the conveyance speed of the glass ribbon G (the abrasive band 13 may be configured so that the rotational peripheral speed thereof is substantially equal to the conveyance speed of the glass ribbon G) .

Also in the initial crack formation device 1 comprising the abrasive band 13, the abrasive band 13 scores the end Ga of the glass ribbon G while rotating in a direction for drawing the glass ribbon G into the conveyance direction B. Therefore, the band 13b can form the initial crack group CG in the end Ga without applying a force against the conveyance direction B to the glass ribbon G. Thus, an excessive force is prevented from being applied to the end Ga, and the situation in which the glass ribbon G is cracked can be avoided to the extent possible.

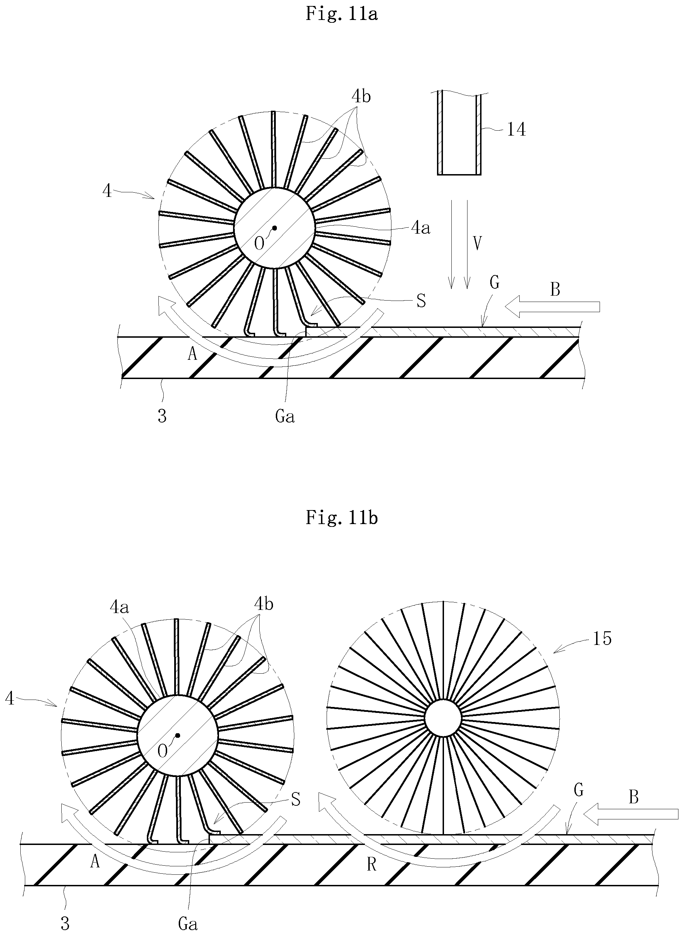

In addition, although the crease removing table is used as the crease removing means in each of the above-mentioned embodiments, there is no limitation on the crease removing means. For example, the crease removing means may have configurations as illustrated in FIGS. 11a and 11b. Note that, also in FIGS. 11a and 11b, components having the same functions or the same shapes as those of the initial crack formation device according to each of the above-mentioned embodiments are denoted by the same reference symbols so that the repeated descriptions thereof are omitted.

As illustrated in FIG. 11a, an air jet device 14 for jetting air V toward the glass ribbon G may be used as the crease removing means. The air jet device 14 is installed on an upstream side with respect to the initial crack formation region S and is configured to jet the air V to a surface of the glass ribbon G directly from above. The air V to be jetted from the air jet device 14 is jetted to a region wider than the width of the glass ribbon G so as to press and remove a crease formed on the glass ribbon G with an air pressure thereof. Note that, the air jet device 14 may be configured to jet the air V at an angle oblique to the surface of the glass ribbon G. Further, the air jet device 14 may be installed at any position as long as the air jet device 14 jets the air V toward a surface on an upstream side with respect to the initial crack formation region S in the conveyance path of the glass ribbon G. Further, the air jet device 14 may be installed so as to remove a crease only in a peripheral portion of the initial crack formation region S. In this case, means for detecting a crease may be used together appropriately.

As illustrated in FIG. 11b, a roll brush 15 for pressing the glass ribbon G while rotating may be used as the crease removing means. The roll brush 15 is installed on the upstream side with respect to the initial crack formation region S and has an axial length larger than the width of the glass ribbon G. Further, the roll brush 15 is configured to rotate in a direction for drawing the glass ribbon G into the conveyance direction B in the same way as in the flap wheel 4 (direction R illustrated in FIG. 11b). Then, the roll brush 15 presses and removes a crease formed on the glass ribbon G while rotating. Note that, the roll brush 15 may be installed so as to remove the crease only in the peripheral portion of the initial crack formation region S. In this case, means for detecting a crease may also be used together appropriately. Further, after the initial crack group CG is formed in the end Ga of the glass ribbon G, the roll brush 15 is raised apart from the glass ribbon G so as to prevent the occurrence of unnecessary contact damages and the adhesion of dirt.

Further, in each of the above-mentioned embodiments, the cases of forming the initial crack group as a start point for cutting (disconnecting), by laser cleaving, a thick selvage part, which is formed at each end in the width direction of the glass ribbon, from the product part to be used as a product have been exemplified. However, the present invention is not limited to those embodiments, and the present invention may also be applied to, for example, the formation of the initial crack group as a start point for cutting a glass sheet in the case of cutting the glass sheet by laser cleaving and adjusting the dimensions thereof, and the case of cutting a small-area glass sheet from large-area mother glass. Further, as the conveyance means for conveying the glass ribbon (glass sheet), a stationary stage made of a resin or the like, as well as the belt conveyor, may be used.

### Reference Signs List

- 1: initial crack formation device
- 2: crease removing table
- 3: belt conveyor
- 4: flap wheel
- 4a: shaft section
- 4b: abrasive cloth
- 5: suction device
- 6: suction device
- 9: initial crack formation member
- 14: air jet device
- 15: roll brush
- O: rotation axis
- OO: rotation axis
- A: rotation direction of flap wheel (abrasive band)
- B: conveyance direction of glass ribbon
- G: glass ribbon (glass sheet)
- Ga: end
- C: initial crack
- CG: initial crack group
- K: glass particle
- S: initial crack formation region
- CG: initial crack group
- K: glass particle
- S: initial crack formation region

## Claims

1. An initial crack formation method for scoring a front-side end (Ga) in a conveyance direction (B) of a glass sheet (G) conveyed in a state supported from below by conveyance means (3) so as to form an initial crack group (CG) including a plurality of aggregated initial cracks (C) in a width direction of the front-side end (Ga) orthogonal to the conveyance direction (B),
the initial crack formation method comprising scoring the front-side end (Ga) with a rotary scoring tool (4),
wherein the rotary scoring tool (4) having flexibility comprises a shaft section (4a) configured to rotate about a rotation axis (O) extending along a surface direction of the glass sheet (G);
**characterized in that**:
the rotary scoring tool (4) is configured to rotate in a direction for drawing the glass sheet (G) into the conveyance direction (B) and scoring the front-side end (Ga) from above, the initial crack formation method further comprises setting a rotational peripheral speed of the rotary scoring tool (4) to be higher than a conveyance speed of the glass sheet (G), and
the rotary scoring tool (4) further comprises a sheet-shaped scoring member (4b) extending radially from the shaft section (4a).

2. The initial crack formation method according to claim 1, wherein the rotary scoring tool (4) is configured to score the front-side end (Ga) while rotating so that, when the rotary scoring tool (4) is located at a position where the sheet-shaped scoring member (4b) and the conveyance means (3) are brought into contact with each other, and the rotary scoring tool (4) is rotated out of contact with the glass sheet (G), a value of P=(F/W) [N/mm] satisfies 0.02<P<0.15, where F [N] represents a pressing force to be applied from the sheet-shaped scoring member (4b) to the conveyance means (3) and W [mm] represents a length in a direction along the rotation axis (O) of a contact part in which the sheet-shaped scoring member (4a) and the conveyance means (3) are brought into contact with each other.

3. The initial crack formation method according to claim 1 or 2, further comprising sucking glass particle (K) generated from the glass sheet (G) with a first suction means (5) when the rotary scoring tool (4) scores the front-side end (Ga), the first suction means (5) being provided on a front side in the conveyance direction (B) of the glass sheet (G) with respect to the rotary scoring tool (4).

4. The initial crack formation method according to any one of claims 1 to 3, further comprising sucking the glass particle (K) generated from the glass sheet (G) with a second suction means (6) when the rotary scoring tool (4) scores the front-side end (Ga), the second suction means (6) covering the rotary scoring tool (4) from above.

5. The initial crack formation method according to any one of claims 1 to 4, further comprising removing a crease formed in the front-side end (Ga) with a crease removing means (2; 14; 15), the crease removing means (2; 14; 15) being provided on an upstream side with respect to an initial crack formation region (S) for forming the initial crack group (CG) in a conveyance path of the glass sheet (G).

## Patentansprüche

1. Anbruchformungsverfahren zum Ritzen eines vorderseitigen Endes (Ga) in Förderrichtung (B) einer Glasplatte (G), die in einem von unten gestützten Zustand durch Fördermittel (3) befördert wird, so dass eine Anbruchgruppe (CG), enthaltend eine Vielzahl von aggregierten Anbrüchen (C) in einer Breitenrichtung des vorderseitigen Endes (Ga) orthogonal zur Förderrichtung (B),
wobei das Anbruchformungsverfahren das Ritzen des vorderseitigen Endes (Ga) mit einem Drehritzwerkzeug (4) umfasst,
wobei das Drehritzwerkzeug (4), das Flexibilität aufweist, einen Wellenabschnitt (4a) umfasst, der beschaffen ist, sich um eine Drehachse (O) zu drehen, die sich entlang einer Oberflächenrichtung der Glasplatte (G) erstreckt,
**dadurch gekennzeichnet, dass**:
das Drehritzwerkzeug (4) beschaffen ist, sich in einer Richtung zu drehen, um die Glasplatte (G) in die Förderrichtung (B) zu drehen und das vorderseitige Ende (Ga) von oben zu ritzen,
wobei das Anbruchformungsverfahren ferner das Einstellen der Umfangsdrehgeschwindigkeit des Drehritzwerkzeugs (4) höher als die Fördergeschwindigkeit der Glasplatte (G) umfasst und
das Drehritzwerkzeug (4) ferner ein plattenförmiges Ritzelement (4b) umfasst, das sich radial vom Wellenabschnitt (4a) erstreckt.

2. Anbruchformungsverfahren nach Anspruch 1, wobei das Drehritzwerkzeug (4) beschaffen ist, das vorderseitige Ende (Ga) zu ritzen, während es sich dreht, so dass, wenn das Drehritzwerkzeug (4) an einer Position angeordnet ist, an der das plattenförmige Ritzelement (4b) und das Fördermittel (3) miteinander in Kontakt gebracht werden, und das Drehritzwerkzeug (4) außer Kontakt mit der Glasplatte (G) gedreht wird, ein Wert von P = (F/W) [N/mm] 0,02 < P < 0,15 erfüllt, wobei F [N] eine Druckkraft repräsentiert, die vom plattenförmigen Ritzelement (4b) auf das Fördermittel (3) ausgeübt wird, und W [mm] eine Länge in einer Richtung entlang der Drehachse (O) eines Kontaktteils repräsentiert, in dem das plattenförmige Ritzelement (4b) und das Fördermittel (3) miteinander in Kontakt gebracht werden.

3. Anbruchformungsverfahren nach Anspruch 1 oder 2, ferner umfassend das Absaugen von Glaspartikeln (K), die von der Glasplatte (G) erzeugt werden, mit einem ersten Absaugmittel (5), wenn das Drehritzwerkzeug (4) das vorderseitige Ende (Ga) ritzt, wobei das erste Absaugmittel (5) auf einer Vorderseite in Förderrichtung (B) der Glasplatte (G) in Bezug auf das Drehritzwerkzeug (4) vorgesehen ist.

4. Anbruchformungsverfahren nach einem der Ansprüche 1 bis 3, ferner umfassend das Absaugen von Glaspartikeln (K), die von der Glasplatte (G) erzeugt werden, mit einem zweiten Absaugmittel (6), wenn das Drehritzwerkzeug (4) das vorderseitige Ende (Ga) ritzt, wobei das zweite Absaugmittel (6) das Drehritzwerkzeug (4) von oben abdeckt.

5. Anbruchformungsverfahren nach einem der Ansprüche 1 bis 4, ferner umfassend das Entfernen einer Falte, die im vorderseitigen Ende (Ga) ausgebildet ist, mit einem Faltenentfernungsmittel (2; 14; 15), wobei das Faltenentfernungsmittel (2; 14; 15) zulaufseitig in Bezug auf einen Anbruchformungsbereich (S) zur Formung der Anbruchgruppe (CG) in einem Förderpfad der Glasplatte (G) vorgesehen ist.

## Revendications

1. Procédé de formation d'une fissure initiale pour le marquage d'une extrémité avant (Ga) en direction du transport (B) d'une feuille de verre (G) transportée en étant supportée par en dessous par des moyens de transport (3) de manière à former un groupe de fissures initiales (CG) comprenant une série de fissures initiales agrégées (C) en direction de la largeur de l'extrémité avant (Ga), de manière orthogonale à la direction du transport (B),
le procédé de formation d'une fissure initiale comprenant le marquage de l'extrémité avant (Ga) avec un outil rotatif (4),
où l'outil rotatif de marquage (4) présentant une flexibilité, comprend une partie axe (4a) configurée pour tourner autour de l'axe de rotation (O) s'étendant en direction de la surface de la feuille de verre (G) ;
**caractérisé en ce que**
l'outil rotatif de marquage (4) est configuré pour tourner en direction de l'étirement de la feuille de verre (G) en direction du transport (B) et marquer l'extrémité avant (Ga) depuis le haut,
le procédé de formation d'une fissure initiale comprenant en outre, le réglage d'une vitesse périphérique de rotation pour l'outil rotatif de marquage (4), pour qu'elle soit supérieure à la vitesse de transport de la feuille de verre (G), et
l'outil rotatif de marquage (4) comprend en outre, un élément de marquage en forme de feuille (4b) s'étendant de manière radiale depuis la partie axe (4a) .

2. Procédé de formation d'une fissure initiale selon la revendication 1, où l'outil rotatif de marquage (4) est configuré pour marquer l'extrémité avant (Ga) par la rotation de sorte que, lorsque l'outil rotatif de marquage (4) se trouve en une position ou l'élément de marquage en forme de feuille (4b) et le moyen de transport (3) sont mis en contact l'un avec l'autre, l'outil rotatif de marquage (4) perd le contact avec la feuille de verre (G), la valeur P=(F/W) [N/mm] satisfait 0,02<P<0,12, où F [N] représente la force de pression à appliquer par l'élément de marquage en forme de feuille (4b) sur le moyen de transport (3), et W [mm] représente la longueur en direction de l'axe de rotation (O) de la partie de contact entre l'élément de marquage en forme de feuille (4b) et le moyen de transport (3).

3. Procédé de formation d'une fissure initiale selon la revendication 1 ou 2, comprenant en outre, l'aspiration des particules de verre (K) générée par la feuille de verre (G) par un premier élément d'aspiration (5) lorsque l'outil rotatif de marquage (4) marque l'extrémité avant (Ga), le premier élément d'aspiration (5) se trouvant sur une partie avant en direction du transport (B) de la feuille de verre (G) par rapport à l'outil rotatif de marquage (4).

4. Procédé de formation d'une fissure initiale selon l'une quelconque des revendications 1 à 3, comprenant en outre, l'aspiration des particules de verre (K) générées par la feuille de verre (G) à l'aide d'un deuxième élément d'aspiration (6) lorsque l'outil rotatif de marquage (4) marque l'extrémité avant (Ga), le deuxième élément d'aspiration (6) couvrant l'outil rotatif de marquage (4) par le haut.

5. Procédé de formation d'une fissure initiale selon l'une quelconque des revendications 1 à 4, comprenant en outre, l'enlèvement d'un pli formé dans l'extrémité avant (Ga) par un élément d'enlèvement de pli (2, 14, 15), l'élément d'enlèvement de pli (2, 14, 15) étant disposé sur un côté amont par rapport à la région de formation d'une fissure initiale (8) pour former le groupe de fissures initiales (CG) dans un trajet de transport de la feuille de verre (G).
